# EUROPÄISCHE PATENTSCHRIFT

(11) **EP 1 626 214 B1**
(45) Veröffentlichungstag und Bekanntmachung des Hinweises auf die Patenterteilung: **28.11.2007**
(21) Anmeldenummer: 05105990.5
(22) Anmeldetag: 01.07.2005
(51) Int. Cl.: F16K 31/06

(54) **Ventilvorrichtung**
Valve device
Soupape

(30) Priorität: 11.08.2004 DE 102004038899
(43) Veröffentlichungstag der Anmeldung: 15.02.2006
(73) Patentinhaber: ROBERT BOSCH GMBH, 70442 Stuttgart (DE)
(72) Erfinder: Heyer, Klaus, 71691 Freiberg (DE); Ambrosi, Massimiliano, 71672 Marbach (DE); Kratzer, Dietmar, 71732 Tamm (DE); Vier, Elmar, 71691 Freiberg A.N. (DE); Pic, Jean-Guillaume, 33450 Saint Sulpice et Cameyrac (FR); Blumenschein, Peter, 74074 Heilbronn (DE)

(56) Entgegenhaltungen:
- DE-A1- 10 342 156
- US-A- 5 605 386
- US-A- 5 683 151
- US-B1- 6 189 985

## Beschreibung

### Stand der Technik

Die Erfindung betrifft eine Ventilvorrichtung mit einem in einem wenigstens annähernd hohlzylindrisch ausgeführten Ventildom längsbeweglich angeordneten und mit einem angefederten Ventilelement zusammenwirkenden Anker gemäß der im Oberbegriff des Patentanspruches 1 näher definierten Art.

Eine derartige und als ein elektromagnetisch betätigbares Ventil ausgeführte Ventilvorrichtung, die insbesondere in hydraulischen Bremsanlagen von Kraftfahrzeugen einsetzbar ist, ist aus der Praxis bekannt. Die Ventilvorrichtung weist einen Ventileinsatz mit einer Längsbohrung, einen mit dem Ventileinsatz verbundenen Ventildom, einen im Ventildom längsbewegbar angeordneten Anker und einen Ventilstößel bzw. ein Ventilelement auf. Das Ventilelement und der Anker stehen derart miteinander in Wirkverbindung, dass eine Ankerbewegung in Schließrichtung eines Ventilsitzes auf das Ventilelement übertragen wird.

Die Ventilvorrichtung wird in stromlosem Zustand durch eine Federeinrichtung bzw. eine Rückstellfeder in geöffnetem Zustand gehalten, wobei die als Druckfeder ausgeführte Federeinrichtung im Ventilraum eingebaut ist. Diese Anordnung der Federeinrichtung gewährleistet eine einfache Montage der Ventilvorrichtung.

An seinem dem Ventileinsatz zugewandten Ende ist der Anker mit einem gegenüber dem Führungsdurchmesser des Ankers im Ventildom reduzierten Außendurchmesser ausgeführten zylindrischen Fortsatz ausgebildet, mit dem der Anker während einer Schließbewegung, d. h. während einer axialen Bewegung ausgehend von einer einem vollständig geöffneten Zustand des Ventilsitzes äquivalenten Position in Richtung des Ventilsitzes, in die Längsbohrung des Ventileinsatzes eintaucht. Das bedeutet, dass die Ventilvorrichtung mit einer so genannten Tauchstufe ausgeführt ist, mittels der der Verlauf einer von dem elektromagnetischen Aktuator generierbaren Magnetkraft im Arbeitshubbereich der Ventilvorrichtung in Richtung eines für eine gute Steuer- und Regelbarkeit der Ventilvorrichtung erwünschten flachen Verlaufs veränderbar ist.

Das Ventilelement ist in der Längsbohrung des Ventileinsatzes mit geringem radialen Spiel geführt und mantelseitig mit wenigstens zwei, voneinander getrennten Kanälen ausgeführt. Eine Ventilkammer bzw. ein Ventilraum der Ventilvorrichtung ist über die Kanäle flüssigkeitsleitend mit einem von dem Ventildom begrenzten Innenraum verbunden, um Restluft im Ventildom über die Kanäle verdrängen zu können.

Aus der DE-A-10342156 ist bereits ein elektromagnetische betätigtes Ventil, insbesondere für hydraulische Bremsanlagen von Kraftfahrzeugen, bekannt. Eine ein Schließglied aufnehmende Ventilkammer wird von einem den Ventilsitz aufnehmenden Ventilsitzteil begrenzt. Die Ventilkammer nimmt einen Filtereinsatz auf, von dem ein rohrförmiges Hülsenteil den Ventilsitz gleichachsig umgibt. Das Hülsenteil verhindert kreisförmige Wirbelströmungen im Bereich des bolzenförmigen Schließglieds und des Ventilsitzes und sorgt für einen raschen Abtransport von Luftblasen, wodurch die Geräuschbildung erheblich verringert wird.

Nachteilig dabei ist jedoch, dass der Anker mit dem mittigen Fortsatz nur mit großem fertigungstechnischen Aufwand herstellbar ist, was zu hohen Fertigungskosten führt. Des Weiteren ist die Ventilvorrichtung im Bereich des Ventildomes nachteilhafterweise nur schwer entlüftbar, da der Fortsatz zur Beeinflussung des Verlaufs der Magnetkraft nur mit geringen Spaltmaßen ohne spezielle Ausformungen, wie beispielsweise den Kanälen entsprechenden Längsnuten, in die Längsbohrung des Ventileinsatzes eintaucht, wodurch die Wirkungsweise der Kanäle während einer Evakuierphase und während einer Befüllphase der Ventilvorrichtung erheblich eingeschränkt ist.

### Vorteile der Erfindung

Die erfindungsgemäße Ventilvorrichtung, die mit einem in einem wenigstens annähernd hohlzylindrisch ausgeführten Ventildom längsbeweglich angeordneten und mit einem angefederten Ventilelement zusammenwirkenden Anker ausgeführt ist, wobei das Ventilelement mit einem Ventilsitz zusammenwirkt und in Einbaulage von einer Federeinrichtung mit einer in Öffnungsrichtung des Ventilsitzes wirkende Kraftkomponente beaufschlagt wird, wobei das Ventilelement mittels eines auf den Anker einwirkenden elektromagnetischen Aktuators in Schließrichtung des Ventilsitzes betätigbar ist und in einem Ventileinsatz längsbeweglich geführt ist, und wobei der Anker und der Ventileinsatz derart ausgebildet und derart zueinander positioniert sind, dass der Anker ausgehend von einer mit einem vollständig geöffneten Zustand des Ventilsitzes äquivalenten Position des Ankers zumindest bei Überschreiten eines vordefinierten Hubwertes des Ankers in Richtung des Ventilsitzes mit seinem dem Ventileinsatz zugewandten Ende in einer Ausnehmung des Ventileinsatz angeordnet ist, ist einfach herstellbar und im Vergleich zu aus der Praxis bekannten Ventilvorrichtungen durch geringere Herstellkosten gekennzeichnet.

Dies wird dadurch erreicht, dass der Außendurchmesser des in die Ausnehmung des Ventileinsatzes eingreifenden Endes des Ankers wenigstens dem Führungsdurchmesser des Ankers im Ventildom entspricht. Das bedeutet, dass der Anker im Bereich seiner Mantelfläche im Wesentlichen zylindrisch und ohne Stufen ausgeführt ist, so dass der Anker eine besonders kostengünstig herzustellende äußere Form aufweist.

Des Weiteren ist der Durchmesser des in die Aussparung bzw. Ausnehmung des Ventileinsatzes eintauchenden Endes des Ankers im Vergleich zu der aus der Praxis bekannten Ventilvorrichtung vergrößert ausgeführt. Dadurch werden die durch die Ausnehmung des Ventileinsatzes verursachten Magnetkraftverluste im Bereich der in axialer Richtung wirkenden Magnetkraftkomponente des Aktuators durch die über den in den Ventileinsatz eingetauchten Ankerbereich in radialer Richtung wirkende Magnetkraftkomponente zumindest derart kompensiert, dass der Verlauf der auf den Anker einwirkenden Magnetkraft in einem Arbeitshubbereich der erfindungsgemäßen Ventilvorrichtung oberhalb eines Verlaufs der Magnetkraft einer herkömmlich ausgeführten Ventilvorrichtung verläuft und zudem derart flach ist, dass die Ventilvorrichtung auf einfache Art und Weise steuer- und regelbar ist.

Ein flacher Verlauf der auf den Anker einwirkenden Magnetkraft des Aktuators im Arbeitshubbereich einer Ventilvorrichtung wirkt sich deshalb positiv auf die Steuer- und Regelbarkeit der Ventilvorrichtung aus, da ein Verlauf der an dem Ventilelement in Öffnungsrichtung des Ventilsitzes angreifenden Hydraulikkräfte im Arbeitshubbereich einer Ventilvorrichtung mit zunehmendem Hub des Ventilelementes ausgehend von der dem vollständig geöffneten Ventilsitz äquivalenten Position in Richtung des Ventilsitzes derartig steil abfällt, dass die Gradienten der Magnetkraft und der Hydraulikkräfte im Arbeitspunkt der Ventilvorrichtung stark voneinander abweichen. Diese Abweichungen führen wiederum beim Auftreten von Störungen, die die Ventilvorrichtung aus dem eingestellten Arbeitspunkt drängen, dazu, dass die dann an dem Ventilelement angreifende und in Richtung des Arbeitspunktes wirkende, resultierende Kraftkomponente derart groß ist, dass sich der Arbeitspunkt der Ventilvorrichtung auf einfache Art und Weise innerhalb kurzer Steuer- und Regelzeiten einstellt.

Darüber hinaus wird eine Entlüftbarkeit und eine Befüllbarkeit der Ventilvorrichtung durch die im Bereich des in den Ventileinsatz eintauchenden Endes des Ankers ungestufte und im Wesentlichen zylindrisch ausgeführte Mantelfläche des Ankers nicht beeinträchtigt, da eine Wirkungsweise von in der Mantelfläche des Ankers angeordneten und in Längsrichtung des Ankers verlaufenden Ankernuten, über welche Hohlräume des Ventildomes auf einfache Art und Weise evakuierbar bzw. entlüftbar sind, in gewünschtem Umfang vorliegt.

Weitere Vorteile und vorteilhafte Weiterbildungen des Gegenstandes nach der Erfindung ergeben sich aus der Beschreibung, der Zeichnung und den Patentansprüchen.

### Zeichnung

In der Zeichnung ist ein Ausführungsbeispiel einer erfindungsgemäß ausgebildeten Ventilvorrichtung schematisch vereinfacht dargestellt, welches in der nachfolgenden Beschreibung näher erläutert wird. Es zeigen:
Figur 1 einen schematisierten Längsschnitt durch eine erfindungsgemäß ausgeführte Ventilvorrichtung, und
Figur 2 den Verlauf einer Magnetkraft über dem Hub eines Ventilelementes der in Fig. 1 dargestellten Ventilvorrichtung und den Verlauf einer Magnetkraft einer ohne Tauchstufe ausgeführten Ventilvorrichtung.

### Beschreibung des Ausführungsbeispiels

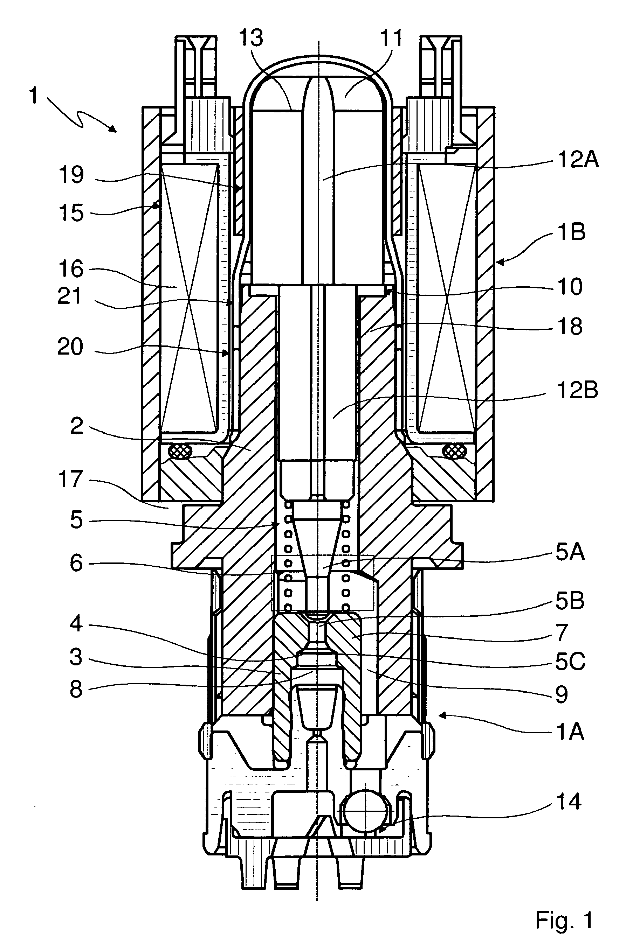

In der Figur 1 ist eine elektromagnetisch betätigbare Ventilvorrichtung 1 gezeigt, die mit einem längsbeweglich in einem Ventileinsatz 2 angeordneten und mit einem in einem Ventilkörper 3 ausgebildeten Ventilsitz 4 zusammenwirkenden Ventilelement 5 ausgebildet ist. Das Ventilelement 5 wird in Einbaulage von einer Federeinrichtung 6 mit einer in Öffnungsrichtung des Ventilsitzes 4 wirkenden Kraftkomponente beaufschlagt und wird über einen elektromagnetischen Aktuator bzw. ein elektrisches Modul 1 B in Schließrichtung des Ventilsitzes 4 betätigt.

Ein dem Ventilsitz 4 zugewandter Bereich des Ventilelementes 5 ist in einem von dem Ventileinsatz 2 im Bereich des Ventilsitzes 4 begrenzten Ventilraum 7, dessen Abmessungen durch das strichpunktiert ausgeführte Rechteck in der Figur 1 näher gezeigt sind, angeordnet, wobei der in dem Ventilraum 7 angeordnete Bereich des Ventilelementes 5 einen kegelstumpfartigen Bereich 5A, einen sich an den kegelstumpfartigen Bereich 5A anschließenden ersten zylindrischen Bereich 5B und einen sich wiederum an den ersten zylindrischen Bereich 5B anschließenden kugelkappenförmigen dritten Bereich 5C aufweist. Der kugelkappenförmige Bereich 5C des Ventilelementes 5 wirkt mit dem kegelförmig ausgeführten Ventilsitz 4 derart zusammen, dass bei Anlage des Ventilelementes 5 an dem Ventilsitz 4 eine derartige Dichtwirkung vorliegt, dass ein Zuströmbereich 8 des Ventilraumes 7 und ein Abströmbereich 9 des Ventilraumes 7 bei geschlossenem Ventilsitz 4 voneinander getrennt sind.

Die Ventilvorrichtung 1 besteht im Wesentlichen aus dem Hydraulikmodul 1A und dem auf das hydraulische Modul 1A aufgesteckten elektrischen Modul 1B, welches in an sich bekannter Art und Weise mit einer Spule 15, einer elektrischen Wicklung 16 und einer Jochringscheibe 17 ausgeführt ist, um einen Anker 10 des hydraulischen Moduls 1A entgegen der Federkraft der Federeinrichtung 6 in Schließrichtung des Ventilsitzes 4 zu betätigen.

Der Anker 10 ist vorliegend in einem mit dem Ventileinsatz 2 fest verbundenen Ventildom 11 längsbeweglich geführt und begrenzt gemeinsam mit dem Ventildom 11 mehrere Kanäle 12A, die einen zwischen dem Ventildom 11 und dem dem Ventilsitz 4 abgewandten Ende des Ankers 10 begrenzten Ventiltotraum 13 über Stößelnuten 12B des Ventilelementes 5 mit dem Ventilraum 7 verbinden.

Der Ventildom 11 ist über einen gegenüber einem Führungsbereich 19 für den Anker 10 mit vergrößertem Durchmesser ausgeführten Verbindungsbereich 20 mit dem Ventileinsatz 2 fest verbunden. Zwischen dem Führungsbereich 19 und dem Verbindungsbereich 20 ist ein Übergangsbereich 21 vorgesehen, dessen Außendurchmesser ausgehend von dem Führungsbereich 19 in Richtung des Verbindungsbereiches 20 stetig zunimmt.

In unbestromtem Zustand des elektrischen Moduls 1B der Ventilvorrichtung 1 wird das Ventilelement 5 durch die Federkraft der Federeinrichtung 6, die sich an der dem Ventilelement 5 zugewandten Stirnfläche des Ventilkörpers 6 in axialer Richtung abstützt, von dem Ventilsitz 4 weg in Richtung des Ventiltotraumes 13 geschoben, so dass der Anker 10 von dem Ventileinsatz 2 wegbewegt wird, im Bereich des Ventiltotraumes 13 gegen den Ventildom 11 gedrückt ist und an diesem anliegt. In dieser Stellung des Ventilelementes 5 und auch des Ankers 10 ist der Ventilsitz 4 von dem Ventilelement 5 bzw. von dem kugelkappenförmigen Bereich 5C des Ventilelementes 5 freigegeben und der Zuströmbereich 8 ist mit dem Abströmbereich 9 verbunden.

Des Weiteren kann in diesem Zustand der Ventilvorrichtung 1 das Betriebsmedium über die Ventilvorrichtung 1, d. h. ausgehend von dem Zuströmbereich 8 des Ventilraumes 7 über den Ventilsitz 4 in den Abströmbereich 9 der Ventilvorrichtung und einem mit dem Abströmbereich 9 verbundenen Bereich eines ABS-(Antiblockiersystem), eines TCS-(Traktions-Control-System), oder eines ESP-Systems (elektronisches Stabilitätsprogramm) geführt werden.

Zum Schließen des Ventilsitzes 4 wird das in bekannter Art und Weise auf den Ventildom 11 aufgesteckte elektrische Modul 1B der Ventilvorrichtung 1 derart bestromt, dass das elektrische Modul 1B eine elektromagnetische Kraft erzeugt, die den Anker 10 von seiner in der Figur 1 dargestellten Position in Richtung des Ventilsitzes 4 verschiebt und den kugelkappenförmigen Bereich 5C des Ventilelementes 5 dichtend gegen den Ventilsitz 4 des Ventilkörpers 6 drückt, dass die Ventilvorrichtung 1 geschlossen ist. In diesem Zustand der Ventilvorrichtung 1 ist der Zuströmbereich 8 von dem Abströmbereich 9 getrennt und es kann kein Betriebsmedium über die Ventilvorrichtung 1 geführt werden, falls zwischen dem Zuströmbereich 8 und dem Abströmbereich 9 ein positives Druckgefälle vorliegt. Vorliegend ist im Inneren der Ventilvorrichtung 1 ein positives Druckgefälle vorhanden, wenn der Druck im Zuströmbereich 8 größer als der Druck im Abströmbereich 9 der Ventilvorrichtung 1 ist.

Dies resultiert aus der Tatsache, dass der Zuströmbereich 8 bei positivem Druckgefälle gegenüber dem Abströmbereich 9 durch ein Rückschlagventil 14 von dem Abströmbereich 9 getrennt ist, wobei das Rückschlagventil 14 bei negativem Druckgefälle, das bedeutet bei Vorliegen eines Drucks in dem Abströmbereich 9, der größer als der Druck des Zuströmbereichs 8 ist, geöffnet ist.

Bei der in Figur 1 dargestellten Ventilvorrichtung 1 ist die Federeinrichtung 6 mit ihrem dem Ventilkörper 3 zugewandten Bereich im Ventilraum 7 angeordnet, der bei geöffnetem Ventilsitz 4 ausgehend von dem Zuströmbereich 8 von Fluid - beim Einsatz der Ventilvorrichtung 1 in einem ABS-System eines Kraftfahrzeuges von Bremsflüssigkeit - in Richtung des Abströmbereiches 9 durchströmt wird.

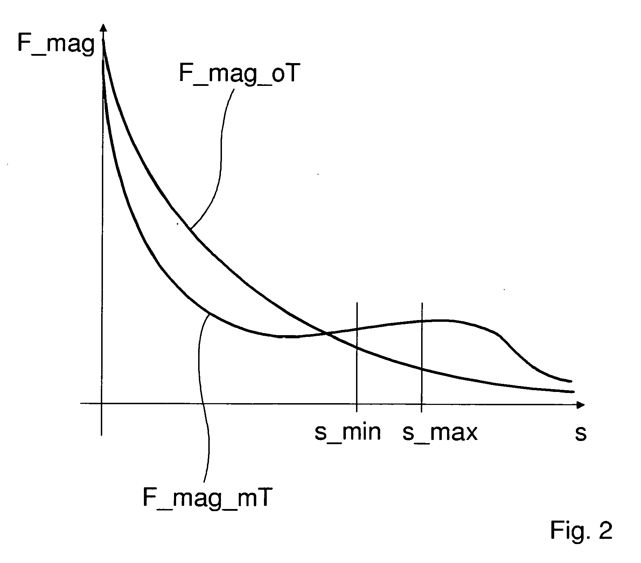

Darüber hinaus ist der Ventileinsatz 2 im Bereich seines dem Anker 10 zugewandten Endes mit einer Ausnehmung 18 ausgeführt, in die der Anker 10 bei einer ausgehend von der in Figur 1 dargestellten Position in Richtung des Ventilsitzes 4 erfolgenden axialen Bewegung mit seinem dem Ventileinsatz 2 zugewandten Ende eintaucht. Das bedeutet, dass in bestimmten Betriebsbereichen der Ventilvorrichtung eine Überdeckung zwischen dem Anker 10 und dem Ventileinsatz 2 vorliegt, die einen in Figur 2 näher dargestellten Verlauf der Magnetkraft F_mag_mT über dem Hub des Ankers 10 bzw. des Ventilelementes 5 zur Folge hat.

Der Anker 10 und der Ventileinsatz 2 sind im Bereich ihrer einander zugewandten Enden derart ausgebildet und derart zueinander positioniert, dass der Anker 10 ausgehend von der in der Figur 1 dargestellten Position, die einem vollständig geöffneten Zustand des Ventilsitzes 4 mit einem Hubwert s_max entspricht, zumindest bei Überschreiten eines vordefinierten Hubwertes des Ankers 10 in Richtung des Ventilsitzes 4 mit seinem dem Ventileinsatz zugewandten Ende in der Ausnehmung 18 des Ventileinsatzes 2 angeordnet ist.

Der Außendurchmesser des in die Ausnehmung 18 des Ventileinsatzes 2 eingreifenden Endes des Ankers 10 entspricht vorliegend dem Führungsdurchmesser des Ankers 10 in einem Führungsbereich 19 des Ventildoms 11 und kann bei einer weiteren vorteilhaften Ausführungsform des Gegenstandes nach der Erfindung auch größer als der Führungsdurchmesser des Ankers ausgeführt sein.

Generell ist die vorbeschriebene Wirksamkeit einer Tauchstufe umso größer, je kleiner der Radialspalt im Überdeckungsbereich zwischen dem Anker und dem Ventileinsatz 2 ist, wobei die Verwendung des Ankeraußendurchmessers für die Tauchstufe zu einer Reduzierung der Radialtoleranz im Vergleich zu gestuft ausgeführten Ankern führt, wodurch auch eine Reduzierung des erforderlichen Radialspiels und auch der Fertigungskosten erreicht wird.

Der Außendurchmesser des dem Ventileinsatz 2 zugewandten Endes des Ankers 10 und ein Innendurchmesser der Ausnehmung 18 des Ventileinsatzes 2 sind derart aufeinander abgestimmt, dass der Anker 10 beim Schließen des Ventilsitzes 4 im Wesentlichen berührungslos in die Ausnehmung 18 des Ventileinsatzes 2 einfährt. Andererseits ist der Außendurchmesser des Ankers 10 und der Innendurchmesser der Ausnehmung 18 des Ventileinsatzes 2 jeweils derart ausgeführt, dass bei einer Überdeckung des Ankers 10 und des Ventileinsatzes 2 im Bereich der Ausnehmung 18 nur ein geringes Spaltmaß vorliegt, so dass eine im Überdeckungsbereich in radialer Richtung des Ankers 10 wirkende Magnetkraft möglichst groß ist und nicht unerwünschterweise durch ein zu großes Spaltmaß reduziert wird.

Das bedeutet, dass der Außendurchmesser 10 und der Innendurchmesser des Ventileinsatzes im Bereich der Ausnehmung 18 derart aufeinander abgestimmt sind, dass einerseits ein Klemmen zwischen diesen beiden Bauteilen vermieden wird und andererseits eine in radialer Richtung wirkende Magnetkraftkomponente ein Maximum anstrebt.

Der in Figur 2 über dem Hub s des Ankers 10 bzw. des Ventilelementes 5 dargestellte Verlauf der Magnetkraft F_mag_mT ist einem Verlauf der Magnetkraft F_mag_oT einer aus der Praxis bekannten und im Bereich des dem Anker 10 zugewandten Endes des Ventileinsatzes 2 ohne die in Figur 1 dargestellte Ausnehmung 18 ausgeführten Ventilvorrichtung gegenübergestellt.

Aus dem Vergleich der beiden Verläufe F_mag_oT und F_mag_mT der Magnetkraft ist ersichtlich, dass der Verlauf der Magnetkraft F_mag_oT einer herkömmlich ausgeführten Ventilvorrichtung ohne Tauchstufe, d. h. einer Ventilvorrichtung mit einem Ventileinsatz ohne Ausnehmung, zunächst oberhalb des Verlaufs der Magnetkraft F_mag_mT der Ventilvorrichtung 1 gemäß Figur 1, deren Ventileinsatz mit einer Tauchstufe für den Anker 10 ausgeführt ist, verläuft. Mit zunehmendem Hub s des Ankers 10 fällt der Verlauf der Magnetkraft F_mag_oT einer Ventilvorrichtung ohne Tauchstufe unter den Verlauf der Magnetkraft F_mag_mT der erfindungsgemäßen Ventilvorrichtung 1 gemäß Figur 1 ab.

Dabei resultiert die zunächst bei einer Ventilvorrichtung ohne Tauchstufe größere Magnetkraft auf der Tatsache, dass die bei der Ventilvorrichtung 1 gemäß Figur 1 im Bereich des dem Anker 10 zugewandten Endes des Ventileinsatzes 2 reduzierte Wandstärke eine Verringerung der Magnetkraftkomponente in axialer Richtung verursacht.

Der ab einem bestimmten Hub s des Ankers 10 flach ausgebildete, vorliegend bereichsweise weitgehend konstante oder sogar leicht ansteigende Bereich des Verlaufs der Magnetkraft F_mag_mT der Ventilvorrichtung 1 gemäß Figur 1 stellt sich aufgrund des Eintauchens des Ankers 10 in die Ausnehmung 18 des Ventileinsatzes 2 ein. Im Überdeckungsbereich des Ankers 10 und des Ventileinsatzes 2 wirkt zusätzlich zu der in axialer Richtung wirkenden Magnetkraftkomponente die vorbeschriebene radiale Magnetkraftkomponente.

Somit greift an dem Anker 10 eine in Schließrichtung der Ventilvorrichtung 1 bzw. des Ventilsitzes 4 wirkende Magnetkraft an, die sich aus der axialen und der radialen Magnetkraftkomponente zusammensetzt. Diese Magnetkraft ist bei der Ventilvorrichtung gemäß Figur 1 im Arbeitsbereich der Ventilvorrichtung 1, der durch den Hubwert s_min und den Hubwert s_max, zu dem der Ventilsitz 4 vollständig geschlossen ist, definiert ist, größer als die Magnetkraft einer Ventilvorrichtung ohne Tauchstufe. Die Magnetkraft der Ventilvorrichtung 1 gemäß Figur 1 ist auch größer als die Magnetkraft einer vorbeschriebenen und aus der Praxis bekannten Ventilvorrichtung mit einer Tauchstufe, die gegenüber dem Führungsdurchmesser des Ankers mit einem reduzierten Durchmesser ausgeführt ist.

Zusätzlich ist die in Figur 1 dargestellte Ventilvorrichtung 1 im Vergleich zu einer aus der Praxis bekannten Ventilvorrichtung mit einem verlängerten Führungsbereich 19 zwischen dem Ventildom 11 und dem Anker 10, vorzugsweise um 20 % bis 40 %, ausgeführt, wodurch im parasitären Nebenluftspalt auftretende Verluste der Magnetkraft reduziert werden. D. h., dass diese Maßnahme zu einer Erhöhung der in axialer Richtung wirkenden Magnetkraft führt. Vorliegend ist die Länge des Führungsbereiches zwischen dem Ventildom 11 und dem Anker 10 von etwa 4 mm auf 6 mm angehoben, so dass Magnetkraftverluste in axialer Richtung durch die Anwendung der Tauchstufe gering gehalten werden.

Die Länge des Führungsbereichs 19 und eine Tiefe der Aussparung 18 des Ventileinsatzes 2 korrespondieren derart miteinander, dass der Verlauf F_mag_mT der in Schließrichtung wirkenden Magnetkraft des elektromagnetischen Aktuators 1B im Arbeitshubbereich der Ventilvorrichtung 1 wenigstens annähernd konstant ist.

Die in Figur 1 gezeigte und ein stromlos offenes 2/2-Druckregelventil darstellende Ventilvorrichtung 1 ist in ihrem Arbeitsdruckbereich durch eine gute Regelstabilität gekennzeichnet, da deren Magnetkraftkennlinie F_mag_mT bei zunehmendem Arbeitsluftspalt einen möglichst flachen Verlauf aufweist. Darüber hinaus ist die erfindungsgemäße Ventilvorrichtung 1 aufgrund der zylindrischen Außenform des Ankers 10 ohne Durchmessersprung einfach und kostengünstig herstellbar.

Der Ventiltotraum 13 bei der in Figur 1 dargestellten Ausgestaltung der Ventilvorrichtung 1 gut entlüftbar und auch einfach mit Betriebsfluid befüllbar, da die Verbindung des Ventiltotraumes 13 und des Ventilraums 7 über die Kanäle 12A und die Stößelnuten 12B durch die Tauchstufe nicht beeinträchtigt ist.

## Patentansprüche

1. Ventilvorrichtung (1) mit einem in einem wenigstens annähernd hohlzylindrisch ausgeführten Ventildom (11) längsbeweglich angeordneten und mit einem angefederten Ventilelement (5) zusammenwirkenden Anker (10), wobei das Ventilelement (5) mit einem in einem Ventilkörper (3) ausgebildeten Ventilsitz (4) zusammenwirkt und in Einbaulage von einer Federeinrichtung (6) mit einer in Öffnungsrichtung des Ventilsitzes (4) wirkenden Kraftkomponente beaufschlagt wird, wobei das Ventilelement (5) mittels eines auf den Anker (10) einwirkenden elektromagnetischen Aktuators (1B) in Schließrichtung des Ventilsitzes (4) betätigbar ist und in einem Ventileinsatz (2) längsbeweglich geführt ist, und wobei der Anker (10) und der Ventileinsatz (2) derart ausgebildet und derart zueinander positioniert sind, das der Anker (10) ausgehend von einer mit einem vollständig geöffneten Zustand des Ventilsitzes (4) äquivalenten Position des Ankers (10) zumindest bei Überschreiten eines vordefinierten Hubwertes des Ankers (10) in Richtung des Ventilsitzes (4) mit seinem dem Ventileinsatz (2) zugewandten Ende in einer Ausnehmung (18) des Ventileinsatzes (2) angeordnet ist, **dadurch gekennzeichnet, dass** der Außendurchmesser des in die Ausnehmung (18) des Ventileinsatzes (2) eingreifenden Endes des Ankers (10) wenigstens dem Führungsdurchmesser des Ankers (10) im Ventildom (11) entspricht, so dass eine Überdeckung zwischen Anker (10) und Ventileinsatz (2) in radialer Richtung verliegt.

2. Ventilvorrichtung nach Anspruch 1, **dadurch gekennzeichnet, dass** der Außendurchmesser des dem Ventileinsatz (2) zugewandten Endes des Ankers (10) und ein Innendurchmesser der Ausnehmung (18) des Ventileinsatzes (2) derart aufeinander abgestimmt sind, dass der Anker (10) beim Schließen des Ventilsitzes (4) im Wesentlichen berührungslos in die Ausnehmung (18) des Ventileinsatzes (2) einführbar ist.

3. Ventilvorrichtung nach Anspruch 1 oder 2, **dadurch gekennzeichnet, dass** der Anker (10) beim Schließen des Ventilsitzes (4) in axialer Richtung über eine derartige Wegstrecke und in Bezug auf die Ausnehmung (18) des Ventileinsatzes (2) mit einem derartigen Spaltmaß in den Ventileinsatz (2) eintaucht, dass der Verlauf einer von dem elektromagnetischen Aktuator (1B) erzeugbaren und in Schließrichtung des Ventilsitzes an dem Anker angreifenden Magnetkraft (F_mag_mT) über den gesamten Arbeitshubbereich des Ventilelementes (5) flach ist.

4. Ventilvorrichtung nach einem der Ansprüche 1 bis 3, **dadurch gekennzeichnet, dass** der Ventildom (11) über einem gegenüber dem Führungsbereich (19) für den Anker (10) mit vergrößertem Durchmesser ausgeführten Verbindungsbereich (20) mit dem Ventileinsatz (2) fest verbunden ist, wobei zwischen dem Führungsbereich (19) und dem Verbindungsbereich (20) ein Übergangsbereich (21) vorgesehen ist, dessen Außendurchmesser ausgehend von dem Führungsbereich (19) in Richtung des Verbindungsbereiches (20) stetig zunimmt.

5. Ventilvorrichtung nach Anspruch 4, **dadurch gekennzeichnet, dass** eine Länge des Führungsbereichs (19) und eine Tiefe der Aussparung (18) des Ventileinsatzes (2) derart miteinander korrespondieren, dass der Verlauf (F_mag_mT) der in Schließrichtung wirkenden Magnetkraft des elektromagnetischen Aktuators (1B) im Arbeitshubbereich wenigstens annähernd konstant ist.

## Claims

1. Valve device (1), with an armature (10) which is arranged longitudinally moveably in a valve dome (11) of at least approximately a hollow-cylindrical design and cooperates with a sprung valve element (5), the valve element (5) cooperating with a valve seat (4) formed in a valve body (3) and, in the installation position, being acted upon by a spring arrangement (6) with a force component acting in the opening direction of the valve seat (4), the valve element (5) being actuable in the closing direction of the valve seat (4) by means of an electromagnetic actuator (1B) acting on the armature (10) and being guided longitudinally moveably in a valve insert (2), the armature (10) and the valve insert (2) being designed and positioned with respect to one another such that the armature (10), starting from a position of the armature (10) equivalent to a fully open state of the valve seat (4), is arranged, at least when a predefined stroke value of the armature (10) in the direction of the valve seat (4) is overshot, with its end facing the valve insert (2) in a recess (18) of the valve insert (2), **characterized in that** the outside diameter of that end of the armature (10) which engages into the recess (18) of the valve insert (2) corresponds at least to the guide diameter of the armature (10) in the valve dome (11), so that there is an overlap between the armature (10) and valve insert (2) in the radial direction.

2. Valve device according to Claim 1, **characterized in that** the outside diameter of that end of the armature (10) which faces the valve insert (2) and an inside diameter of the recess (18) of the valve insert (2) are coordinated with one another such that, during the closing of the valve seat (4), the armature (10) can be introduced essentially contactlessly into the recess (18) of the valve insert (2).

3. Valve device according to Claim 1 or 2, **characterized in that**, during the closing of the valve seat (4), the armature (10) penetrates in the axial direction into the valve insert (2) over such a distance and, with respect to the recess (18) of the valve insert (2), with such a gap dimension that the profile of a magnetic force (F_mag_mT) capable of being generated by the electromagnetic actuator (1B) and acting on the armature in the closing direction of the valve seat is flat over the entire working-stroke range of the valve element (5).

4. Valve device according to one of Claims 1 to 3, **characterized in that** the valve dome (11) is firmly connected to the valve insert (2) via a connection region (20) designed with an enlarged diameter in relation to the guide region (19) for the armature (10), a transitional region (21) being provided between the guide region (19) and the connection region (20), the outside diameter of which increases continuously, starting from the guide region (19), in the direction of the connection region (20).

5. Valve device according to Claim 4, **characterized in that** a length of the guide region (19) and a depth of the recess (18) of the valve insert (2) match with one another such that the profile (F_mag_mT) of the magnetic force, acting in the closing direction, of the electromagnetic actuator (1B) is at least approximately constant in the working-stroke range.

## Revendications

1. Soupape (1) comportant un induit (10) coopérant avec un élément de soupape à ressort (5) et mobile longitudinalement dans un dôme de soupape (11) au moins sensiblement cylindrique creux,
l'élément de soupape (5) coopérant avec un siège de soupape (4) réalisé dans un corps de soupape (3) et sollicité en position de montage par un système de ressort (6) exerçant une composante de force agissant dans le sens de l'ouverture du siège de soupape (4),
l'élément de soupape (5) étant actionné par un actionneur électromagnétique (1B) agissant sur l'induit (10) dans le sens de fermeture du siège de soupape (4) en étant guidé longitudinalement dans un insert de soupape (2) et
l'induit (10) et l'insert de soupape (2) sont réalisés et positionnés l'un par rapport à l'autre pour que, partant d'une position équivalente à un état totalement ouvert du siège de soupape (4), l'induit (10), au moins en dépassant une course prédéfinie en direction du siège de soupape (4), se trouve avec son extrémité tournée vers l'insert de soupape (2) dans une cavité (18) de l'insert de soupape (2),
**caractérisée en ce que**
le diamètre extérieur de l'extrémité de l'induit (10) pénétrant dans la cavité (18) de l'insert de soupape (2) correspond au moins au diamètre de guidage de l'induit (10) dans le dôme de soupape (10) pour avoir un chevauchement entre l'induit (10) et l'insert de soupape (7) dans la direction radiale.

2. Soupape selon la revendication 1,
**caractérisée en ce que**
le diamètre extérieur de l'extrémité de l'induit (10) tourné vers l'insert de soupape (2) et le diamètre intérieur de la cavité (18) de l'insert de soupape (2) sont définis l'un par rapport à l'autre pour qu'à la fermeture du siège de soupape (4) l'induit (10) s'introduise pratiquement sans contact dans la cavité (18) de l'insert de soupape (2).

3. Soupape selon la revendication 1 ou 2,
**caractérisée en ce qu'**
à la fermeture du siège de soupape (4), l'induit (10) pénètre dans la direction axiale et sur un trajet tel, par rapport à la cavité (18) de l'insert de soupape (2) et avec un intervalle tel dans l'insert de soupape (2) que l'évolution de la force magnétique générée par l'actionnement électromagnétique (1B) et agissant sur l'induit dans le sens de fermeture du siège de soupape (force magnétique F-mag-mT) soit de forme plate dans toute la plage de la course de travail de l'élément de soupape (5).

4. Soupape selon l'une des revendications 1 à 3,
**caractérisée en ce que**
le dôme de soupape (11) est relié solidairement à l'insert de soupape (2) par une zone de liaison (20) de diamètre agrandi par rapport à celui de la zone de guidage (19) de l'induit (10) et entre la zone de guidage (19) et la zone de liaison (20), il y a une zone transitoire (21) dont le diamètre extérieur augmente en continu à partir de la zone de guidage (19) en direction de la zone de liaison (20).

5. Soupape selon la revendication 4,
**caractérisée en ce qu'**
une longueur de la zone de guidage (19) et une profondeur de la cavité (18) de l'insert de soupape (2) se correspondent pour que la courbe (F-mag-mT) de la force magnétique agissant dans le sens de fermeture de l'actionneur électromagnétique (1B) soit au moins sensiblement constante dans la plage de la course active.
